# FASCICULE DE BREVET EUROPEEN

(11) **EP 1 665 684 B1**
(45) Date de publication et mention de la délivrance du brevet: **30.04.2008**
(21) Numéro de dépôt: 03818695.3
(22) Date de dépôt: 15.09.2003
(51) Int. Cl.: H04L 12/58

(54) **SYSTEME ET PROCEDE DE TRANSMISSION D'UN MESSAGE MULTIMEDIA**
SYSTEM UND VERFAHREN ZUM SENDEN EINER MULTIMEDIA-NACHRICHT
SYSTEM AND METHOD FOR TRANSMITTING A MULTIMEDIA MESSAGE

(43) Date de publication de la demande: 07.06.2006
(73) Titulaire: FRANCE TELECOM, 75015 Paris (FR)
(72) Inventeur: PROUVOST, Denis, F-75015 Paris (FR)
(74) Mandataire: Fréchède, Michel
(86) Numéro de dépôt international: PCT/FR2003/002718
(87) Numéro de publication internationale: WO 2005/029795

(56) Documents cités:
- EP-A- 0 804 045
- EP-A- 1 128 691
- US-A1- 2002 044 634
- US-A1- 2003 172 173

## Description

L'invention concerne les systèmes de télécommunication et se rapporte, en particulier, à la transmission de messages multimédias d'un premier terminal vers un deuxième terminal de télécommunication en utilisant un réseau de télécommunication.

L'invention s'applique en particulier à la transmission de messages vers un poste de téléphonie mobile, mais également, de manière générale, à la transmission de messages multimédias vers tout type de terminal de télécommunication, du type poste téléphonique, assistant personnel (PDA), micro-ordinateur, ...

Comme on le conçoit, la transmission de messages multimédias, en particulier vers des postes téléphoniques de type mobile ou vers des assistants personnels, engendre des problèmes de restitution des messages dans la mesure où, pour des raisons d'encombrement, les interfaces homme-machine dont sont pourvus de tels terminaux ne permettent pas de restituer de manière claire l'ensemble des informations contenues dans de tels messages. Ce problème se pose de manière accrue lorsque le message est élaboré à partir d'un micro-ordinateur et est destiné à un téléphone mobile cellulaire. En effet, dans ce cas, le message doit être converti dans un format compatible avec le terminal destinataire pour pouvoir restituer convenablement l'ensemble des informations contenues dans le message.

Le document US 2003/0172173 décrit un processus de conversion de format comparable. Il ne permet toutefois pas d'assurer qu'un message soit affiché exactement de la même manière sur tous les terminaux mobiles destinataires.

Par ailleurs, la mise en oeuvre d'un service de messagerie multimédia MMS (Multimédia Messaging Service), qui permet aux utilisateurs d'appareils mobiles de recevoir ou d'envoyer des messages pouvant contenir du texte, des images et du son, implique l'utilisation d'un client logiciel embarqué à bord de l'appareil mobile pour charger et restituer les messages. Or, un tel client est difficile à faire évoluer. Une version donnée du client MMS supporte l'ensemble des fonctionnalités prévues. En cas d'ajout de fonctionnalités nouvelles au service MMS, un utilisateur porteur d'un poste mobile dans lequel est chargé une version précédente du client MMS ne pourra pas bénéficier des nouvelles fonctionnalités. En outre, en cas de défaut du client logiciel embarqué se traduisant par des anomalies de fonctionnement, il est difficile de corriger à distance ces défauts.

Enfin, il existe différentes implémentations des clients MMS, ce qui ne permet pas d'offrir la garantie à l'émetteur que le message qu'il a composé sera affiché exactement de la même manière sur tous les mobiles destinataires de son message MMS.

Au vu de ce qui précède, le but de l'invention est de fournir un procédé d'un système de télécommunication permettant de pallier les inconvénients précités.

Selon l'invention, il est donc proposé un système de télécommunication pour la transmission de messages multimédias d'un premier terminal de télécommunication vers un deuxième terminal de télécommunication par l'intermédiaire d'un réseau de télécommunication, comprenant un serveur de messagerie destiné à recevoir les messages du premier terminal et à les transmettre vers le deuxième terminal de télécommunication.

Le serveur de messagerie comporte des moyens pour élaborer un programme de diffusion des messages destiné à être téléchargé par le deuxième terminal pour diffuser les messages en fonction des caractéristiques dudit deuxième terminal.

Ainsi, le programme de diffusion des messages, qui se charge d'afficher les messages définis par les émetteurs, et qui est élaboré à la demande des utilisateurs destinataires en fonction des caractéristiques du terminal, est en permanence à jour et permet d'adapter le message à la nature des différents terminaux destinataires.

Selon une autre caractéristique du système de télécommunication selon l'invention, le système comporte en outre un centre de service de messages courts pour la transmission d'une notification de message au deuxième terminal après réception d'un message par le serveur de messagerie.

Selon une autre caractéristique de l'invention, le serveur de messagerie comporte des moyens pour identifier le type de terminal destinataire d'un message et une base de données dans laquelle sont chargées, pour chaque type de terminal, un ensemble de caractéristiques dudit terminal, le programme de diffusion étant élaboré par le serveur de messagerie en fonction des caractéristiques du deuxième terminal identifié.

Par exemple, le premier terminal comporte un navigateur internet qui est utilisé pour l'élaboration des messages.

En variante, le premier terminal comporte, stockée en mémoire dans une plate-forme de gestion des ressources matérielles dudit terminal, une application logicielle de création de messages, préalablement téléchargée.

Selon un mode de réalisation avantageux, le serveur de messagerie communique avec une base de données d'un opérateur de télécommunication pour l'élaboration du programme de diffusion à partir de données relatives au premier terminal ou au porteur du premier terminal extraites de la base de données.

En outre, selon une autre caractéristique de l'invention, le programme de diffusion peut comporter des codes d'instruction aptes à provoquer l'affichage sur un écran du deuxième terminal d'un menu pour la sélection de procédures à exécuter par ledit deuxième terminal et à lancer l'exécution desdites procédures.

Selon l'invention, il est également proposé un procédé de transmission d'un message multimédia d'un premier terminal de télécommunication vers un deuxième terminal de télécommunication par l'intermédiaire d'un réseau de télécommunication, au moyen d'un système de télécommunication tel que défini ci-dessus, caractérisé en ce qu'il comporte les étapes suivantes :
- élaboration dudit message au moyen du premier terminal de télécommunication;
- transmission du message au serveur de messagerie ;
- transmission d'une notification de message au deuxième terminal ;
- émission par le deuxième terminal d'une requête de diffusion dudit message ;
- élaboration d'un programme de diffusion de message en réponse à la requête de diffusion en fonction des caractéristiques du deuxième terminal ;
- téléchargement du programme de diffusion ; et
- mise en oeuvre du programme de diffusion.

Selon un mode de mise en oeuvre, au cours de l'étape d'élaboration du programme de diffusion, on extrait de la requête de diffusion un champ contenant une indication du type de terminal auquel appartient le deuxième terminal, le programme de diffusion étant élaboré à partir de caractéristiques du deuxième terminal extraites d'une base de données dans laquelle sont chargées, pour chaque type de terminal, un ensemble de caractéristiques dudit terminal.

Selon une autre caractéristique du procédé selon l'invention, la notification du message est effectuée par transmission d'un message court par l'intermédiaire d'un centre de service de messages courts.

Selon un mode de mise en oeuvre avantageux, le programme de diffusion est élaboré à partir de données extraites d'une base de données d'un opérateur de télécommunication dans laquelle sont stockées des informations relatives au premier terminal ou au porteur dudit premier terminal

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 est un schéma synoptique illustrant l'architecture générale et le fonctionnement d'un système de télécommunication conforme à l'invention ;
- la figure 2 est une vue d'un écran d'ordinateur sur lequel est affichée une interface homme-machine permettant l'élaboration d'un message multimédia ;
- la figure 3 est une vue de l'interface homme-machine de la figure 2 utilisée pour la sélection de photographies pour l'élaboration du message multimédia ;
- la figure 4 est un schéma illustrant l'élaboration d'un message multimédia au moyen d'un poste téléphonique mobile cellulaire ; et

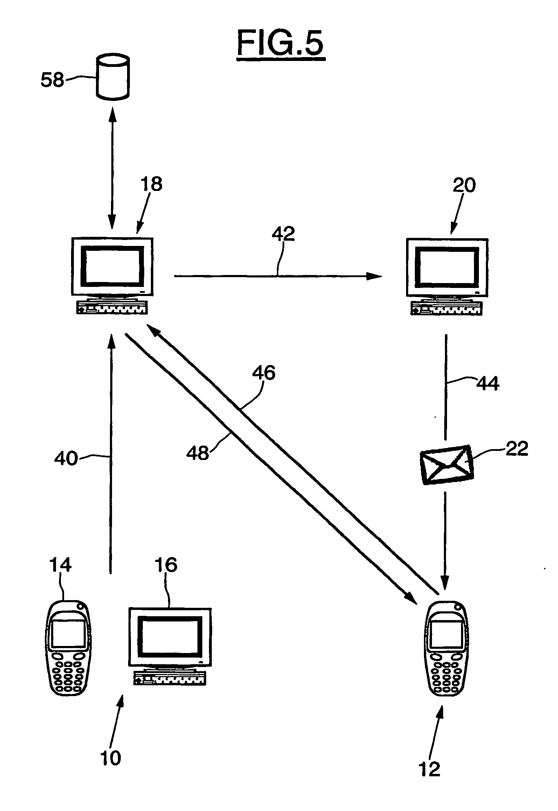

- la figure 5 illustre un autre mode de réalisation d'un système de télécommunication selon l'invention.

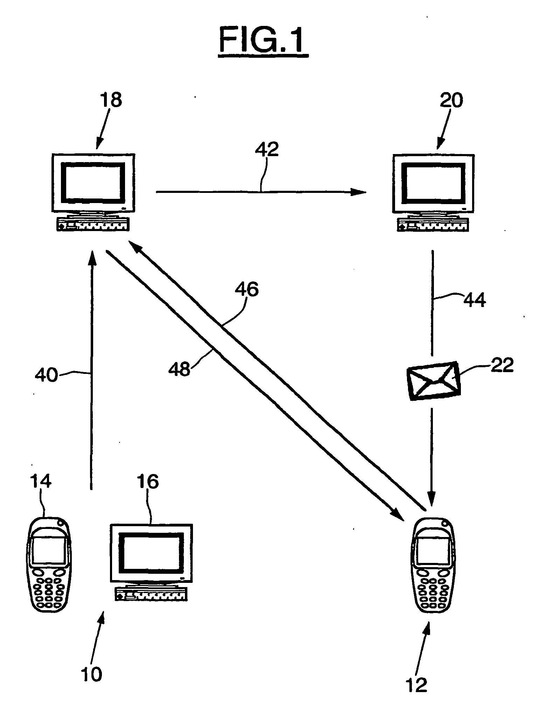

Sur la figure 1, on a représenté la structure générale d'un système de télécommunication conforme à l'invention. Ce système est destiné à transmettre un message multimédia d'un premier terminal de télécommunication 10 vers un deuxième terminal de télécommunication 12.

Comme on le voit sur la figure 1, le premier terminal peut être constitué par tout type de terminal capable d'entrer en communication avec le terminal destinataire 12, et d'élaborer et de transmettre à destination de ce terminal 12 un message multimédia. Ainsi, par exemple, le premier terminal 10 peut être constitué par un poste téléphonique mobile 14, un micro-ordinateur 16, ou encore un assistant personnel (PDA), ...L'invention s'applique toutefois également à l'élaboration et à la transmission de messages multimédia à partir d'un centre serveur d'un fournisseur de services.

En ce qui concerne le deuxième poste de télécommunication 12, on notera que l'invention s'applique en particulier à la transmission de messages vers un poste téléphonique mobile. On conçoit néanmoins que l'invention s'applique également à l'élaboration et à la transmission de messages multimédias vers tout type de poste de télécommunication, tels qu'un assistant personnel (PDA) ou un téléphone fixe.

Comme on le voit sur la figure 1, le système de télécommunication comporte essentiellement un serveur de messagerie 18 destiné, d'une part, à la réception des messages en provenance du poste de télécommunication émetteur 10 et à restituer ce message au poste destinataire 12. Le serveur de messagerie 18 communique avec le poste émetteur 10 et avec le poste destinataire 12 par l'intermédiaire du réseau de télécommunication auquel appartiennent respectivement les postes émetteurs et récepteurs. Ainsi, dans le cas où les postes émetteur et récepteur sont chacun constitués par un poste téléphonique mobile, le serveur de messagerie 18 communique avec ces postes par l'intermédiaire du réseau téléphonique cellulaire.

Le système de télécommunication est par ailleurs pourvu d'un centre de service de messages courts SMSC (« Short Message Service Center ») 20 destiné à notifier au terminal destinataire 12 la réception d'un message par le serveur de messagerie 18. Cette notification s'effectue, par exemple, au moyen d'un message court SMS (« Short Message Service »). On notera toutefois qu'une telle notification peut également s'effectuer par un service de type « Wap push » ou par un courrier électronique de type courriel, en fonction de la nature du terminal 12 destinataire du message.

Pour restituer le message reçu, le serveur de messagerie 18 est pourvu d'un compilateur assurant la création d'un programme de diffusion véhiculant les données à restituer au destinataire, et qui est destiné à être exécuté au sein du poste destinataire 12 pour permettre la consultation du message par un utilisateur porteur du poste 12.

Conformément à une caractéristique de l'invention, ce programme de diffusion est élaboré en réponse à une requête de diffusion émise par le poste destinataire 12 et est généré de manière à permettre la restitution du message en fonction des caractéristiques du poste 12.

A cet effet, comme cela sera décrit en détail par la suite, le serveur de messagerie 18 comporte une base de données dans laquelle sont stockées, pour chaque type de mobile destinataire, un ensemble de caractéristiques représentatives des particularités et capacités du poste, ces caractéristiques étant utilisées pour l'élaboration du programme de diffusion. Ainsi, en réponse à une requête de téléchargement émise en provenance du terminal destinataire 12, le serveur de messagerie 18 extrait de l'en-tête de la requête un champ d'identification du type de terminal et récupère de la base les caractéristiques correspondantes du poste émetteur de la requête. Ces caractéristiques sont alors utilisées soit pour élaborer un programme de diffusion, soit pour adapter un programme de diffusion préalablement élaboré afin de générer, par compilation, un programme de diffusion qui contient l'ensemble des codes d'instruction servant à la restitution du message par le poste destinataire 12 en utilisant les fonctionnalités et les capacités de ce poste 12.

Comme indiqué précédemment, ce système permet l'élaboration et la transmission d'un message multimédia à destination d'un poste distant 12 constitué, de préférence, par un poste téléphonique mobile cellulaire. Le message est élaboré par un poste émetteur 10 constitué soit par un ordinateur, soit par un téléphone mobile ou encore par un serveur d'un fournisseur de services. Selon ces trois modes de mise en oeuvre, ce Système fonctionne de manière similaire. En effet, en référence à la figure 1 sur laquelle des flèches représentent des phases de fonctionnement, d'un procédé de transmission de messages multimédias, le système qui vient d'être décrit s'utilise de la manière suivante.

Pour procéder à l'élaboration d'un message, il convient d'assembler des briques multimédias préalablement chargées en mémoire dans le poste émetteur 10. Dans le cas de l'utilisation d'un micro-ordinateur ou d'un téléphone mobile, cet assemblage peut s'effectuer soit au moyen d'un navigateur web, en ce qui concerne le micro-ordinateur 16, soit au moyen d'un navigateur de type wap (« Wireless Application Protocole ») ou de type web, en ce qui concerne l'utilisation d'un téléphone mobile. Par exemple, lors de la création du message, l'utilisateur sélectionne et assemble une suite de fichiers correspondant chacun à des images ou à de la vidéo et associe chaque fichier à du texte ou à un fichier son. Il choisit en outre les effets esthétiques qu'il souhaite donner à son message, par exemple en choisissant le mode d'enchaînement des écrans, ou en programmant une activation, pour chaque écran, de fonctions spécifiques du poste 12, par exemple une activation du vibreur, du rétro-éclairage du clavier et/ou de l'écran,... Le message peut également être élaboré au moyen d'une application préalablement téléchargée qui permet d'assembler des fichiers et de définir le mode de présentation des messages afin de rendre plus conviviale la création du contenu multimédia.

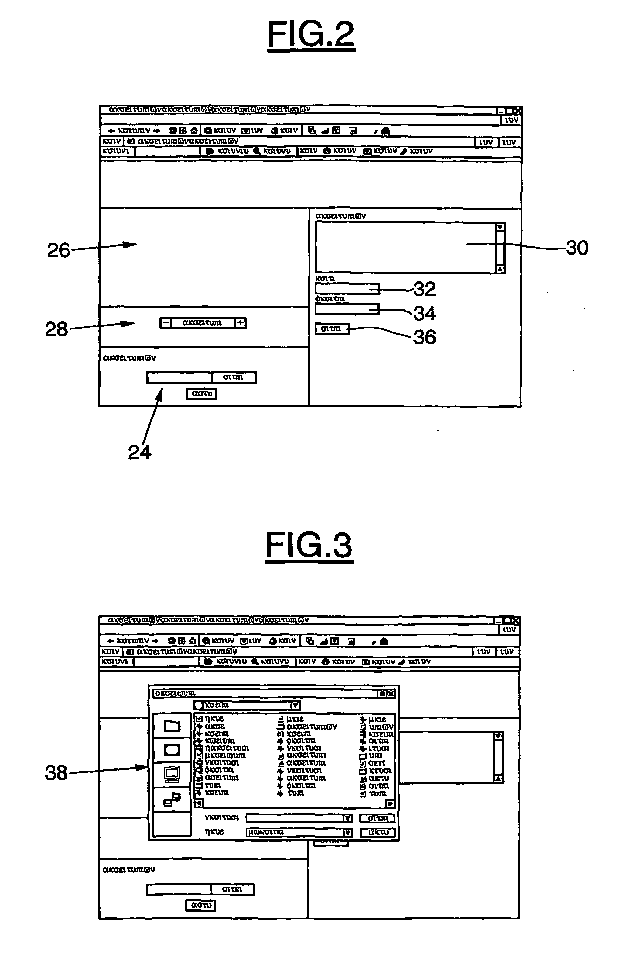

Comme on le voit sur les figures 2 et 3, sur lesquelles on a représenté des exemples d'interface homme-machine servant à l'élaboration d'un message à partir de l'ordinateur 16, un message multimédia à destination du poste mobile 12 peut être créé au moyen d'une interface présentée sur l'écran de l'ordinateur 16. Une telle interface comporte par exemple une première fenêtre 24 servant à la sélection d'un contenu vidéo ou d'une image, associée à une zone 26 permettant le visionnage du contenu vidéo ou de l'image sélectionné et à une zone de commande 28 permettant une modification de la taille de la photo ou de la vidéo. Une fenêtre 30 permet, le cas échéant, la saisie d'un texte destiné à être superposé aux images. Elle est associée à un premier champ 32 permettant la saisie du nom du destinataire et à un deuxième champ 34 permettant la saisie du numéro RNIS du poste mobile 12, c'est-à-dire le numéro MSISDN du destinataire. Enfin, à un bouton de commande 36 permet de commander l'envoi du message. Comme on le voit sur la figure 3, la sélection de la fenêtre 24 permet l'accès à une fenêtre 38 de visualisation de l'ensemble des fichiers disponibles et la sélection du contenu à envoyer.

Comme indiqué précédemment, au cours de cette phase d'élaboration du message, il est également possible de créer une suite d'écrans successifs correspondant chacun à une image ou à un contenu vidéo associé à du texte ou à un contenu sonore, et dont les enchaînements, par exemple sous la forme de fondus-enchaînés, ou , de manière générale le mode de présentation, par exemple une activation de fonctions spécifiques du poste 12, sont choisis par l'utilisateur.

Après création du message et action sur le bouton de commande 36, le contenu multimédia est envoyé au serveur de messagerie 18 (étape 40). En réponse, le serveur de messagerie 18 informe le centre de services de messages courts 20 de la réception d'un tel message (étape 42). L'arrivée d'un tel message est alors notifié à l'utilisateur distant ou à l'ensemble des destinataires (étape 44), sous la forme d'un message court 22.

Lorsque l'utilisateur souhaite prendre connaissance du message, une requête de diffusion est alors transmise au serveur de messagerie 18 (étape 46). En réponse, le serveur 18 extrait de l'en-tête de la requête de diffusion, l'indication du type de terminal auquel appartient le poste mobile 12 puis extrait de la base de données la liste des caractéristiques du poste 12. Le programme de diffusion est alors compilé à partir de ces caractéristiques puis est transmis au terminal destinataire 12 (étape 48). L'exécution de ce programme de diffusion au sein du terminal 12 provoque alors la présentation du message au destinataire et ce, en utilisant les fonctionnalités disponibles du terminal 12.

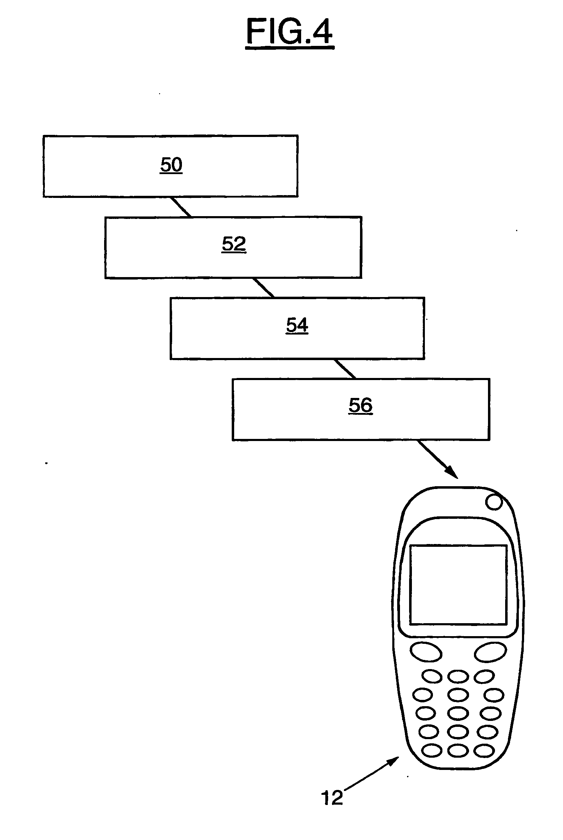

En se référant à la figure 4, une procédure similaire est utilisée pour l'élaboration et la transmission d'un message multimédia au moyen d'un téléphone mobile cellulaire 14.

En effet, cette procédure débute par une première étape 50 de sélection d'un contenu vidéo ou d'une image, suivie d'une étape 52 au cours de laquelle l'utilisateur ajoute du texte au message ainsi élaboré et choisit la liste des destinataires. On notera qu'une interface similaire à celle décrite précédemment en référence aux figures 2 et 3, mais de structure simplifiée peut être utilisée pour l'élaboration du message. Lors de l'étape 54 suivante, le message est envoyé au serveur de messagerie qui le notifie, par l'intermédiaire du centre de services de messages courts 20 à l'utilisateur destinataire. Lorsque l'utilisateur distant souhaite récupérer le message, une requête de diffusion est alors automatiquement envoyée au serveur de messagerie 18, lequel élabore le programme de diffusion et transmet ce programme au terminal destinataire 12 (étape 56).

Comme dans l'exemple de réalisation décrit précédemment en référence aux figures 2 et 3, cette procédure selon laquelle le message est élaboré à partir d'un poste mobile, permet de créer des messages de diverses natures, par exemple une suite d'images, ou un contenu vidéo associé le cas échéant à des informations textuelles, pour lesquels le mode de présentation peut être prédéfini, par exemple en sélectionnant le mode d'enchaînement des images ou en prévoyant une activation des fonctions spécifiques du poste.

Par ailleurs, l'invention qui vient d'être décrite s'applique également à l'élaboration et à la transmission de messages au moyen de tout type d'équipement de télécommunication 10 convenant pour une telle application ou de tout type d'équipement informatique 10, tel qu'un serveur.

On notera que le mode de mise en oeuvre du procédé de transmission de messages multimédia utilisant un serveur pour l'élaboration et la diffusion d'un tel message est similaire au mode de fonctionnement décrit précédemment. Néanmoins, dans ce cas, l'ensemble des actions s'effectue de manière automatisée.

On notera également que, dans les différents modes de réalisation décrits précédemment, l'élaboration du programme de diffusion peut s'effectuer selon différentes techniques.

Ainsi, par exemple, le programme de diffusion peut être élaboré sous la forme d'une application de type midlet développée au moyen d'une plate-forme spécifique incorporée au serveur de messagerie. Par exemple, la midlet peut être constituée par une application de type Java® générée au moyen d'une plate-forme J2ME (Java 2 Micro Edition), développée par la société Sun Microsystems, le poste mobile étant également pourvu d'une plate-forme J2ME correspondante pour l'exécution du programme de diffusion.

Cependant, un tel programme de diffusion peut également être élaboré au moyen d'autres techniques, par exemple au moyen de plates-formes spécifiques telles que les plates-formes Symbian OS® développée par la société Symbian ou Smartphone ® développée par la société Microsoft.

## Revendications

1. Système de télécommunication pour la transmission de messages multimédia d'un premier terminal de télécommunication (10) vers un deuxième terminal de télécommunication (12) par l'intermédiaire d'un réseau de télécommunication, comprenant un serveur de messagerie (18) destiné à recevoir les messages du premier terminal et à les transmettre vers le deuxième terminal de télécommunication, **caractérisé en ce que** le serveur de messagerie (18) comporte des moyens pour élaborer un programme de diffusion des messages destiné à être téléchargé par le deuxième terminal (12) pour diffuser les messages en fonction des caractéristiques dudit deuxième terminal.

2. Système de télécommunication selon la revendication 1, **caractérisée en ce qu'**il comporte en outre un centre de service de messages courts (20) pour la transmission d'une notification de message au deuxième terminal après réception d'un message par le serveur de messagerie.

3. Système de télécommunication selon l'une des revendications 1 et 2, **caractérisée en ce que** le programme de diffusion est élaboré par le serveur de messagerie (18) en fonction des caractéristiques du deuxième terminal.

4. Système de télécommunication selon la revendication 3, **caractérisée en ce que** le serveur de messagerie (18) comporte des moyens pour identifier le type de terminal destinataire d'un message et une base de données dans laquelle sont chargées, pour chaque type de terminal, un ensemble de caractéristiques dudit terminal, le programme de diffusion étant élaboré à partir des caractéristiques du type de terminal identifié.

5. Système de télécommunication selon l'une quelconque des revendications I à 4, **caractérisé en ce que** le premier terminal (10) comporte un navigateur Internet qui est utilisé pour l'élaboration des messages.

6. Système de télécommunication selon l'une quelconque des revendications 1 à 4, **caractérisé en ce que** le premier terminal (10) comporte, stockée en mémoire dans une plate-forme de gestion des ressources matérielle dudit premier terminal, une application logicielle de création de message, préalablement téléchargée.

7. Système de télécommunication selon l'une quelconque des revendications 1 à 6, **caractérisé en ce que** le serveur de messagerie (18) est apte à communiquer avec une base de données (58) d'un opérateur de télécommunication pour l'élaboration du programme de diffusion à partir de données relatives au premier terminal ou au porteur du premier terminal extraites de la bas de données.

8. Système de télécommunication selon l'une quelconque des revendications I à 7, **caractérisé en ce que** le programme de diffusion comporte des codes d'instruction aptes à provoquer l'affichage sur un écran du deuxième terminal d'un menu pour la sélection de procédures à exécuter par le deuxième terminal (12) et à lancer l'exécution desdites procédures.

9. Procédé de transmission d'un message multimédia d'un premier terminal de télécommunication (10) vers un deuxième terminal de télécommunication (12) par l'intermédiaire d'un réseau de télécommunication, au moyen d'un système de télécommunication selon l'une quelconque des revendications 1 à 8, **caractérisé en ce qu'**il comporte les étapes suivantes :
- élaboration dudit message au moyen du premier terminal de télécommunication (10);
- transmission du message au serveur de messagerie (18);
- transmission d'une notification de message au deuxième terminal (12);
- émission par le deuxième terminal d'une requête de diffusion dudit message;
- élaboration d'un programme de diffusion de message en réponse à la requête de diffusion, en fonction des caractéristiques du deuxième terminal (12);
- téléchargement du programme de diffusion ; et
- mise en oeuvre du programme de diffusion.

10. Procédé selon la revendication 9, **caractérisé en ce qu'**au cours de l'étape d'élaboration du programme de diffusion, on extrait de la requête de diffusion un champ contenant une indication du type de terminal auquel appartient le deuxième terminal, le programme de diffusion étant élaboré à partir de caractéristiques du deuxième terminal extraites d'une base de données dans laquelle sont chargées, pour chaque type de terminal, un ensemble de caractéristiques dudit terminal.

11. Procédé selon la revendication 10, **caractérisé en ce que** la notification du message est effectuée par transmission d'un message court par l'intermédiaire d'un centre de service de messages courts (20).

12. Procédé selon l'une quelconque des revendications 9 à 11, **caractérisé en ce que** le programme de diffusion est élaboré à partir de données extraites d'une base de données d'un opérateur de télécommunication dans laquelle sont stockées des informations relatives au premier terminal (10) ou au porteur dudit premier terminal.

13. Serveur de messagerie destiné à recevoir les messages d'un premier terminal de télécommunication et à les transmettre vers un deuxième terminal de télécommunication, **caractérisé en ce qu'**il comporte des moyens pour élaborer un programme de diffusion des messages destiné à être téléchargé par le deuxième terminal pour diffuser les messages en fonction des caractéristiques dudit deuxième terminal.

14. Programme d'ordinateur comportant des instructions et mémorisé sur un support de mémorisation pour exécution par un ordinateur ou par un serveur de messagerie diffusant des messages selon la revendication 13, **caractérisé en ce que** lors de l'exécution desdites instructions ledit programme exécute l'élaboration d'un programme de diffusion des messages destiné à être téléchargé par un terminal pour diffuser les messages en fonction des caractéristiques dudit terminal, l'élaboration dudit programme de diffusion étant exécutée au moyen d'un compilateur à partir de données extraites d'une base de données d'un opérateur de télécommunication et relatives à un autre terminal de télécommunication ou au porteur de cet autre terminal de télécommunication.

15. Programme de diffusion de messages comportant des instructions et mémorisé sur un support de mémorisation pour exécution par un ordinateur ou par un terminal de télécommunication, **caractérisé en ce que** suite au téléchargement dudit programme de diffusion à partir d'un serveur de messagerie selon la revendication 13, l'exécution desdites instructions provoque l'affichage sur l'écran dudit ordinateur ou dudit terminal de télécommunication d'un menu pour la sélection de procédures à exécuter par ledit ordinateur ou ledit terminal de télécommunication et le lancement desdites procédures.

## Claims

1. A telecommunications system for transmitting multimedia messages from a first telecommunications terminal (10) to a second telecommunications terminal (12) via a telecommunications network, comprising a message server (18) intended to receive the messages from the first terminal and to transmit them to the second telecommunications terminal, **characterized in that** the message server (18) includes means for elaborating a program for broadcasting messages, intended to be downloaded by the second terminal (12) in order to broadcast the messages according to the characteristics of said second terminal.

2. The telecommunications system according to claim 1, **characterized in that** it further includes a short message service centre (20) for transmitting a message notification to the second terminal after the message server has received a message.

3. The telecommunications system according to any of claims 1 and 2, **characterized in that** the broadcasting program is elaborated by the message server (18) according to the characteristics of the second terminal.

4. The telecommunications system according to claim 3, **characterized in that** the message server (18) includes means for identifying the type of terminal to which a message is addressed and a database in which for each type of terminal, a set of characteristics of said terminal is loaded, the broadcasting program being elaborated from the characteristics of the identified terminal type.

5. The telecommunications system according to any of claims 1 to 4, **characterized in that** the first terminal (10) includes an Internet browser which is used for elaborating messages.

6. The telecommunications system according to any of claims 1 to 4, **characterized in that** the first terminal (10) includes, a software application for creating messages, downloaded beforehand, stored in memory in a hardware resource management platform of said first terminal.

7. The telecommunications system according to any of claims 1 to 6, **characterized in that** the message server (18) is adapted to communicate with a database (58) of a telecommunications operator for elaborating the broadcasting program from data relating to the first terminal or to the bearer of the first terminal, extracted from the database.

8. The telecommunications system according to any of claims 1 to 7, **characterized in that** the broadcasting program includes instruction codes capable of causing a menu to be displayed on a screen of the second terminal, for selecting procedures to be executed by the second terminal (12), and of initiating execution of said procedures.

9. A method for transmitting a multimedia message from a first telecommunications terminal (10) to a second telecommunications terminal (12) via a telecommunications network, by means of a telecommunications system according to any of claims 1 to 8, **characterized in that** it includes the following steps:
- elaborating said message by means of the first telecommunications terminal (10);
- transmitting the message to the message server (18);
- transmitting a message notification to the second terminal (12);
- having the second terminal emit a request for broadcasting said message;
- elaborating a message broadcasting program in response to the broadcasting request, according to the characteristics of the second terminal (12);
- downloading the broadcasting program; and
- applying the broadcasting program.

10. The telecommunications method according to claim 9, **characterized in that**, during the step for elaborating the broadcasting program, a field containing an indication of the terminal type to which the second terminal belongs, is extracted from the broadcasting request, the broadcasting program being elaborated from the characteristics of the second terminal, extracted from a database in which, for each terminal type, a set of characteristics of said terminal is loaded.

11. The telecommunications method according to claim 10, **characterized in that** notification of the message is performed by transmitting a short message via a service centre (20) for short messages.

12. The telecommunications method according to any of claims 9 to 11, **characterized in that** the broadcasting program is elaborated from data extracted from a database of a telecommunications operator in which information relative to the first terminal (10) or to the bearer of said first terminal is stored.

13. A message server intended to receive messages from a first telecommunications terminal and to transmit them to a second telecommunications terminal, **characterized in that** it includes means for elaborating a program for broadcasting messages, intended to be downloaded by the second terminal in order to broadcast messages according to the characteristics of said second terminal.

14. A computer program including instructions and stored on a memory medium, to be executed by a computer or by a message server, broadcasting messages according to claim 13, **characterized in that**, during the execution of said instructions, said program performs the elaboration of a program for broadcasting messages, intended to be downloaded by a terminal in order to broadcast messages according to the characteristics of said terminal, the elaboration of said broadcasting program being performed by means of a compiler, from data extracted from a database of a telecommunications operator and relating to another telecommunications terminal or to the bearer of this other telecommunications terminal.

15. A program for broadcasting messages including instructions and stored on a memory medium, to be executed by a computer or by a telecommunications terminal, **characterized in that**, after downloading of said broadcasting program from a message server according to claim 13, execution of said instructions causes a menu for selecting procedures to he executed by said computer or said telecommunications terminal, to be displayed on the screen of said computer or said telecommunications terminal and initiation of said procedures.

## Patentansprüche

1. Telekommunikationsystem zur Übertragung von Multimedia-Nachrichten von einem ersten Telekommunikationterminal (10) zu einem zweiten Telekommunikationterminal (12) über ein Telekommunikationnetz, das einen Nachrichtenserver (18) umfasst, der zum Empfang der Nachrichten des ersten Terminals und zur Übertragung derselbigen zum zweiten Telekommunikationterminal bestimmt ist, **dadurch gekennzeichnet, dass** der Nachrichtenserver (18) Mittel zur Erarbeitung eines Nachrichtensendeprogramms umfasst, das zum Downloading durch das zweite Terminal (12) bestimmt ist, um die Nachrichten in Abhängigkeit von den Merkmalen dieses zweiten Terminals zu senden.

2. Telekommunikationsystem nach Anspruch 1, **dadurch gekennzeichnet, dass** es ferner ein Kurznachrichtenservicecenter (20) für die Sendung einer Nachrichtenmitteilung an das zweite Terminal nach Empfang einer Nachricht bei dem Nachrichtenserver umfasst.

3. Telekommunikationsystem nach einem der Ansprüche 1 und 2, **dadurch gekennzeichnet, dass** das Sendeprogramm vom Nachrichtenserver (18) in Abhängigkeit von den Merkmalen des zweiten Terminals erarbeitet wird.

4. Telekommunikationsystem nach Anspruch 3, **dadurch gekennzeichnet, dass** der Nachrichtenserver (18) Mittel zur Erkennung des Empfängerterminaltyps einer Nachricht und eine Datenbank umfasst, in der für jeden Terminaltyp eine Reihe von Merkmalen dieses Terminals geladen sind, wobei das Sendeprogramm aufgrund der Merkmale des erfassten Terminaltyps erarbeitet wird.

5. Telekommunikationsystem nach einem der Ansprüche 1 bis 4, **dadurch gekennzeichnet, dass** das erste Terminal (10) einen Internetbrowser umfasst, der für die Erarbeitung der Nachrichten benutzt wird.

6. Telekommunikationsystem nach einem der Ansprüche 1 bis 4, **dadurch gekennzeichnet, dass** das erste Terminal (10) im Speicher einer Verwaltungsplattform der Hardwareressourcen dieses Terminals eine Softwareanwendung zur Erstellung von Nachrichten umfasst, die im Vorfeld heruntergeladen wird.

7. Telekommunikationsystem nach einem der Ansprüche 1 bis 6, **dadurch gekennzeichnet, dass** der Nachrichtenserver (18) geeignet ist, mit einer Datenbank (58) eines Telekommunikationanbieters zu kommunizieren, um das Sendeprogramm aufgrund der Daten im Hinblick auf das erste Terminal oder den Inhaber des ersten Terminals zu erarbeiten, die von der Datenbank abgezogen worden sind.

8. Telekommunikationsystem nach einem der Ansprüche 1 bis 7, **dadurch gekennzeichnet, dass** das Sendeprogramm Anweisungskodes umfasst, die geeignet sind, die Anzeige eines Menüs zur Auswahl der vom zweiten Terminal (12) auszuführenden Prozeduren auf einem Bildschirm des zweiten Terminals und zum Start der Ausführung der besagten Prozeduren herbeizuführen.

9. Verfahren zur Übertragung einer Multimedia-Nachricht eines ersten Telekommunikationterminals (10) zu einem zweiten Telekommunikationterminal (12) über ein Telekommunikationnetz mittels eines Telekommunikationsystems nach einem der Ansprüche 1 bis 8, **dadurch gekennzeichnet, dass** es die nachstehenden Etappen umfasst:
- Erarbeitung dieser Nachricht mittels des ersten Telekommunikationterminals (10);
- Übertragung der Nachricht an den Nachrichtenserver (18);
- Übertragung einer Nachrichtenmitteilung an das zweite Terminal (12);
- Sendung einer Sendeanfrage dieser Nachricht durch das zweite Terminal;
- Erarbeitung eines Nachrichtensendeprogramms in Beantwortung der Sendeanfrage in Abhängigkeit von den Merkmalen des zweiten Terminals (12);
- Downloading des Sendeprogramms, und
- Ausführung des Sendeprogramms.

10. Verfahren nach Anspruch 9, **dadurch gekennzeichnet, dass** im Verlauf der Erarbeltungsetappe des Sendeprogramms aus der Sendeanfrage ein Feld abgefragt wird, das einen Verweis auf den Terminaltyp beinhaltet, zu dem das zweite Terminal gehört, wobei das Sendeprogramm aufgrund der Merkmale des zweiten Terminals erarbeitet wird, die aus einer Datenbank abgefragt worden sind, In der für jeden Terminaltyp eine Reihe von Merkmalen dieses Terminals geladen sind.

11. Verfahren nach Anspruch 10, **dadurch gekennzeichnet, dass** die Nachrichtenmitteilung durch Übertragung einer Kurznachricht über ein Kurznachrichtenservicecenter (20) erfolgt.

12. Verfahren nach einem der Ansprüche 9 bis 11, **dadurch gekennzeichnet, dass** das Sendeprogramm aufgrund von aus einer Datenbank eines Telekommunikatlonanbieters abgefragten Daten erarbeitet wird, In der informationen im Hinblick auf das erste Terminal (10) oder den Inhaber des genannten ersten Terminals gespelchert sind.

13. Nachrichtenserver zum Empfang der Nachrichten eines ersten Telekommunikationterminals und zur Übertragung derselbigen auf ein zweites Telekommunikationterminal, **dadurch gekennzeichnet, dass** er Mittel zur Erarbeitung eines Sendeprogramms der Nachrichten umfasst, das durch Downloading bei dem zweiten Terminal zwecks Sendung der Nachrichten in Abhängigkeit von den Merkmalen des genannten zweiten Terminals bestimmt ist.

14. Computerprogramm, das Anweisungen umfasst und auf einem Speicherträger zur Ausführung durch einen Computer oder durch einen Nachrichtenserver, der Nachrichten nach Anspruch 13 sendet, gespeichert wird, **dadurch gekennzeichnet, dass** das Programm anlässlich der Ausführung der genannten Anweisungen die Erarbeitung eines Sendeprogramms der Nachrichten ausführt, das durch Downloading bei einem Terminal bestimmt ist, um die Nachrichten in Abhängigkeit von den Merkmalen des genannten Terminals zu senden, wobei die Erarbeitung des genannten Sendeprogramms mittels eines Compilers aufgrund von Daten erfolgt, die aus einer Datenbank eines Telekommunikationanbieters abgefragt worden sind und ein anderes Telekommunikationterminal oder den Inhaber dieses anderen Telekommunikationterminals betreffen.

15. Nachrichtensendeprogramm, das Anweisungen umfasst und auf einem Speicherträger zur Ausführung durch einen Computer oder ein Telekammunikationterminal gespeichert wird, **dadurch gekennzeichnet, dass** die Ausführung der genannten Anweisungen infolge des Downloading des genannten Sendeprogramms ab einem Nachrichtenserver nach Anspruch 13 die Anzeige auf einem Bildschirm des genannten Computers oder des genannten Telekommunikationterminals eines Menüs zur Auswahl von Prozeduren, die vom genannten Computer oder Telekommunikationterminal auszuführen sind, und zum Auslösen des Starts der genannten Prozeduren.
